# EUROPÄISCHE PATENTSCHRIFT

(11) **EP 0 715 928 B1**
(45) Veröffentlichungstag und Bekanntmachung des Hinweises auf die Patenterteilung: **14.04.1999**
(21) Anmeldenummer: 95119243.4
(22) Anmeldetag: 06.12.1995
(51) Int. Cl.: B23Q 1/60, B23Q 16/00, B23Q 16/04

(54) **Linearantrieb**
Linear drive
Entraînement linéaire

(30) Priorität: 07.12.1994 DE 4443467
(43) Veröffentlichungstag der Anmeldung: 12.06.1996
(73) Patentinhaber: Wilfried Strothmann GmbH & Co KG Maschinenbau und Handhabungstechnik, 33758 Schloss Holte-Stukenbrock (DE)
(72) Erfinder: Strothmann, Wilfried, D-33758 Schloss Holte-Stukenbrock (DE); Massow, Rainer, D-33758 Schloss Holte-Stukenbrock (DE)
(74) Vertreter: TER MEER STEINMEISTER & PARTNER GbR

(56) Entgegenhaltungen:
- DE-A- 2 847 943
- US-A- 2 465 542
- US-A- 4 053 250
- DATABASE WPI Week 8120 Derwent Publications Ltd., London, GB; AN E5886D & SU-A-761 159 (MOSC MACH CONS) , 8.September 1980

## Beschreibung

Die Erfindung betrifft einen Linearantrieb mit einer ortsfesten Führungsschiene und einem auf dieser verfahrbaren Schlitten.

Derartige Linearantriebe sind in verschiedenen Ausführungsformen bekannt. Der Schlitten kann sich auf der Führungsschiene beispielsweise mit Hilfe eines Spindelantriebs, eines Zahnstangenantriebs oder auch eines Zugriemens hin- und herbewegen. Die Länge derartiger Linearantriebe ist zumeist begrenzt, da bei längeren Antriebssystemen der bauliche Aufwand sehr hoch wird und zunehmende Reibungskräfte in den Antriebszügen auftreten. Die Trägheitskräfte steigen stark an, so daß die Arbeitsgeschwindigkeit bei vertretbarem Energieaufwand abnimmt. Da sich in verschiedener Hinsicht physikalische Grenzen abzeichnen, verstärken sich Positionierungsfehler zunehmend, und auch bei einem Einsatz des Antriebs in Teilbereichen der Gesamtstrecke verringert sich die Fahrdynamik und Arbeitsgenauigkeit.

Der Erfindung liegt daher die Aufgabe zugrunde, einen Linearantrieb der gattungsgemäßen Art zu schaffen, der bei begrenztem Bauaufwand weite Strecken zurücklegen kann und in partiellen Arbeitsbereichen der Gesamtstrecke eine hohe Fahrdynamik und Arbeitgenauigkeit bietet.

Diese Aufgabe wird erfindungsgemäß bei einem Linearantrieb der obigen Art dadurch gelöst, daß der Schlitten einen Primärschlitten bildet, der eine Führung zur Aufnahme eines parallel zur Bewegungsrichtung des Primärschlittens mit Hilfe eines Antriebsmotors verfahrbaren Sekundärschlittens bildet, und daß Verriegelungseinrichtungen zur alternativen Verriegelung des Primärschlittens oder des Sekundärschlittens in bezug auf die ortsfeste Führungsschiene vorgesehen sind.

Wenn bei einem derartigen Antrieb der Primärschlitten in bezug auf die ortsfeste Führungsschiene verriegelt wird, kann der Sekundärschlitten auf diesem hin- und hergehend bewegt werden und bestimmungsgemäße Transportaufgaben wahrnehmen. Wird der Sekundärschlitten verriegelt und der Primärschlitten gelöst, so kann der Primärschlitten auf der ortsfesten Führungsschiene in eine neue Position verfahren werden. Wird er hier wiederum verriegelt und der Sekundärschlitten gelöst, so kann dieser in einem neuen Bewegungsbereich eingesetzt werden. Diese ständig abwechselnde Bewegung läßt sich beispielsweise durch die Länge einer ganzen Halle fortsetzen. Zu diesem Zweck ist nur ein einziger Antriebsmotor mit einem relativ kurzen Antriebshub, nämlich der relativen Bewegung zwischen Primärschlitten und Sekundärschlitten notwendig. Die Führungsschiene, die sich über die gesamte Förderstrecke erstreckt, muß keinerlei Antriebsmittel enthalten. Sie muß lediglich die Führung des Primärschlittens und eine wahlweise Verriegelung des Primär- oder des Sekundärschlittens in mehreren oder beliebigen Positionen gestatten.

An dem Sekundärschlitten können weitere Unterschlitten, etwa ein vertikal beweglicher oder ein quer zur Bewegung des Sekundärschlittens verfahrbarer Schlitten angebracht sein.

Im folgenden werden bevorzugte Ansführungsbeispiele der Erfindung anhand der beigefügten Zeichnung näher erläutert.
- Fig. 1: ist eine perspektivische Darstellung des erfindungsgemäßen Linearantriebs, bei der der Primärschlitten in einer ersten Position verriegelt und der Sekundärschlitten beweglich ist, und bei der die in einem strichpunktierten Kreis gezeigte Verriegelungseinrichtung zusätzlich vergrößert dargestellt ist;
- Fig. 2: ist eine entsprechende Darstellung, bei der der Primärschlitten in bezug auf die ortsfeste Führungsschiene gelöst und der Sekundärschlitten zur Vorbereitung der Verschiebung des Primärschlittens verriegelt ist;
- Fig. 3: ist eine entsprechende perspektivische Ansicht, bei der sich der Primärschlitten in einer zweiten Position auf der ortsfesten Führungsschiene befindet;
- Fig. 4: in der entsprechenden Darstellung ist der Primärschlitten in der zweiten Stellung verriegelt und der Sekundärschlitten auf dem Primärschlitten frei beweglich.

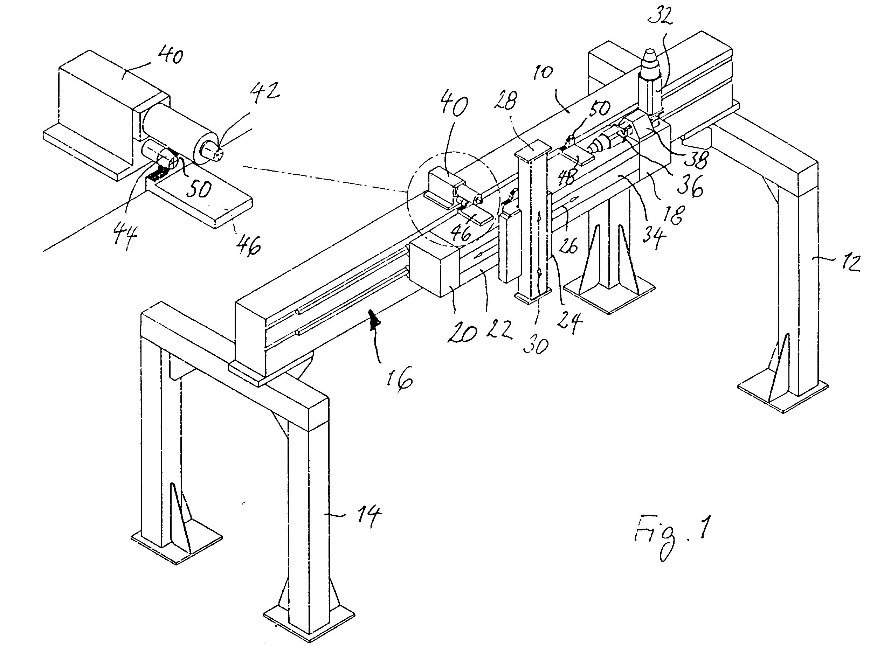

In Figur 1 ist ein kastenförmiger Träger 10 gezeigt, der an seinen beiden Enden auf zwei Böcken 12 und 14 abgestützt ist. An dem Träger 10 ist eine Führungsschiene 16 angebracht, die sich in Längsrichtung des Trägers erstreckt. Diese Grundkonstruktion ist als vereinfachtes Beispiel zu verstehen. In der Praxis kann die Führungsschiene 16 an einem beliebigen, langgestreckten Bauteil angeordnet sein, und sie kann insbesondere wesentlich länger sein, als es sich aus Figur 1 ergibt.

Auf der Führungsschiene 16 ist ein Primärschlitten 18 verschiebbar geführt, der seinerseits in Bewegungsrichtung entlang der Führungsschiene 16 langgestreckt ist und auf der freiliegenden Außenfläche 20 eine Führung 22 aufweist, die sich parallel zu der Führungsschiene 16 erstreckt. Auf der Führung 22 ist ein Sekundärschlitten 24 verfahrbar, wie durch den Doppelpfeil 26 angedeutet ist. Auf dem Sekundärschlitten 24 ist ein in senkrechter Richtung verfahrbarer Vertikalschlitten 28 mit Bewegungsrichtung entlang dem Doppelpfeil 30 angebracht. Anstelle des Vertikalschlittens 28 oder zusätzlich zu diesem kann ein Schlitten vorgesehen sein, der quer zur Bewegungsrichtung des Sekundärschlittens 24 in waagerechter Richtung verfahrbar ist.

Im dargestellten Beispiel bewegen sich der Primärschlitten 18 und der Sekundärschlitten 24 in waagerechter Richtung, jedoch ist die Orientierung des erfindungsgemäßen Linearantriebs im Raum für die vorliegende Erfindung unerheblich.

Auf dem Primärschlitten 18 ist ein Antriebsmotor 32 angebracht, der als steuerbarer und umschaltbarer Getriebemotor ausgebildet ist. Die senkrechte, nicht dargestellte Ausgangswelle des Antriebsmotors 32 tritt in das Innere des Primärschlittens 18 ein und trägt dort ein Zahnrad, um das ein Zahnriemen 34 umläuft, der am anderen Ende des Primärschlittens um ein ebenfalls nicht dargestelltes weiteres, freilaufendes Zahnrad herumgeführt ist. Der Zahnriemen 34 ist fest mit dem Sekundärschlitten 24 verbunden, so daß durch hin- und hergehende Drehung der Ausgangswelle des Antriebsmotors 32 der Sekundärschlitten in bezug auf den Primärschlitten in Richtung des erwähnten Doppelpfeils 26 hin- und herbewegt werden kann.

Ein weiterer, liegend auf dem Primärschlitten angeordneter Antriebsmotor 36 treibt über ein unter einer Verkleidung 38 liegendes Zahnrad und einen Zahnriemen eine im Inneren des Primärschlittens 18 in dessen Längsrichtung gelagerte Keilwelle, die über ein mit dem Sekundärschlitten 24 mitlaufendes Zahnrad den Vertikalschlitten 28 anhebt bzw. absenkt.

Erfindungsgemäß ist auf der oberen Oberfläche des Trägers 10 innerhalb des strichpunktiert eingekreisten Bereichs eine Verriegelungsvorrichtung 40 angebracht, die links oben in Figur 1 in vergrößerter Darstellung gezeigt ist. Die Verriegelungsvorrichtung 40 meist einen oberen und einen unteren Riegelbolzen 42, 44 auf. Diese Riegelbolzen können alternativ ausgefahren oder zurückgezogen werden. Dies kann pneumatisch, elektromagnetisch, hydraulisch oder anderweitig geschehen.

Auf der Oberseite des Primärschlittens 18 befinden sich in der Nähe der beiden Endbereiche Winkelplatten 46, 48 mit Bohrungen in den aufragenden Schenkein 50, die zur Aufnahme des unteren Riegelbolzens 44 dienen. Die aufragenden Schenkel 50 sind in Figur 1 ausgebrochen dargestellt, so daß die Bohrungen nur teilweise erkennbar sind. In der Darstellung der Figur 1 liegt der untere Riegelbolzen 44 in der Bohrung, so daß der Primärschlitten 18 in bezug auf die Führungsschiene 16 verriegelt ist. Der Sekundärschlitten 24 kann jedoch auf dem Primärschlitten 18, der in der gezeigten Position als ortsfest zu betrachten ist, hin- und hergefahren werden.

Es liegt auf der Hand, daß insbesondere auch die zuvor geschilderte Verriegelung ausschließlich als vereinfachtes Beispiel zu verstehen ist. Die Verriegelungseinrichtung kann auch so ausgebildet sein, daß der Primärschlitten 18 in beliebiger Position der Führungsschiene 16 verriegelt werden kann, indem der Primärschlitten beispielsweise mit einer Feststellbremse ausgerüstet wird, die sich im Bereich der Führungsschiene 16 verklemmt.

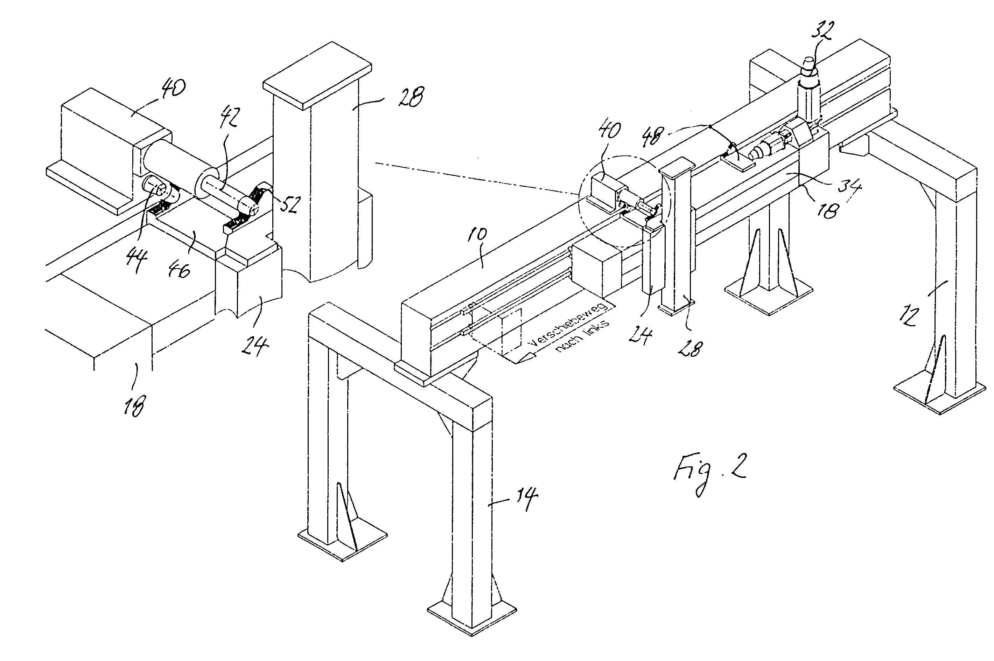

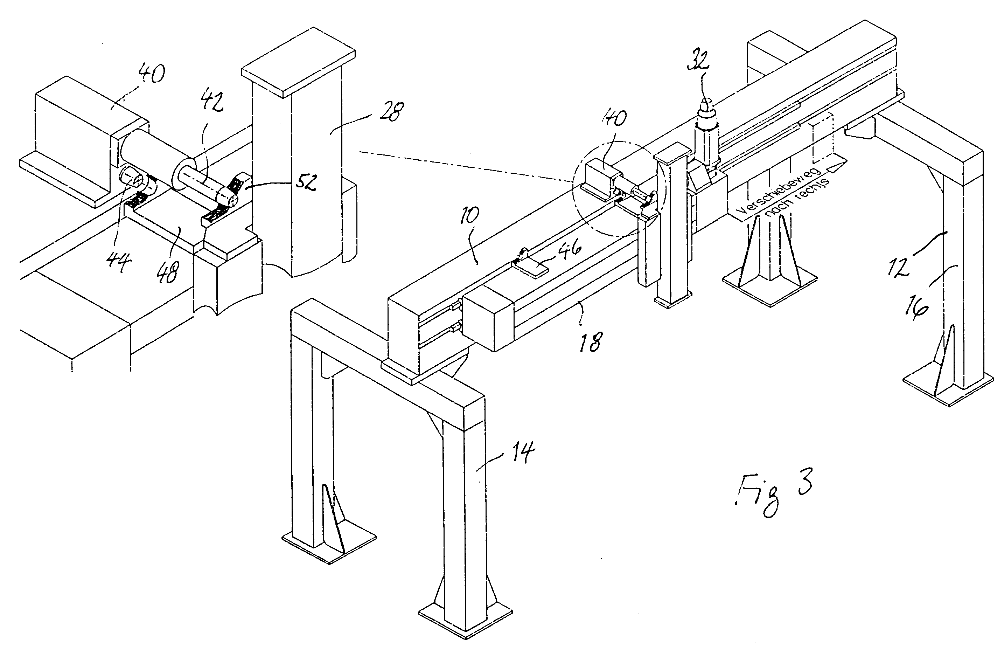

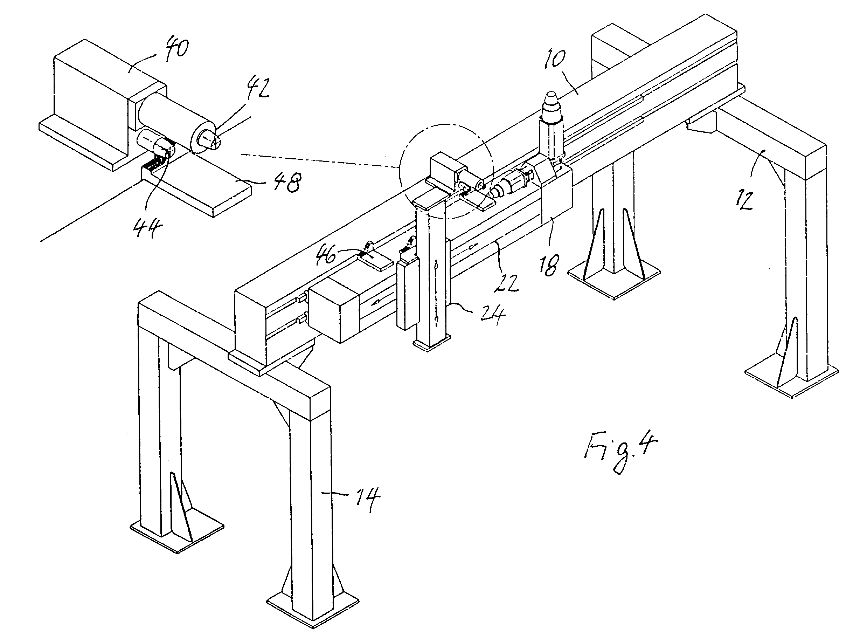

Gemäß Figur 2, in der der Sekundärschlitten 24 gegenüber Figur 1 geringfügig nach links verfahren ist, ist der untere Riegelbolzen 44 zurückgezogen, so daß der Primärschlitten 18 wieder freigegeben ist, und der obere Riegelbolzen 42 ist ausgefahren. Dieser trifft in eine nicht bezeichnete Bohrung einer Verriegelungsplatte 52, die am Sekundärschlitten 24 angebracht ist. Der Sekundärschlitten 24 ist damit in bezug auf die Führungsschiene 16 bzw. den Träger festgelegt und kann folglich als ortsfest betrachtet werden. Wird nunmehr der Antriebsmotor 32 eingeschaltet, und der Zahnriemen 34 angetrieben, so wird dieser durch den Sekundärschlitten 24 festgehalten. Es bewegt sich daher der Primärschlitten 18 in bezug auf den ortsfesten Sekundärschlitten 24 und die Führungsschiene 16. Der Primärschlitten 18 kann entlang der Führungsschiene 16 verfahren werden. Er gelangt dabei beispielsweise nach links in Figur 2 in die strichpunktiert angedeutet linke Endstellung, die in Fig. 3 und 4 in durchgezogenen Linien gezeigt ist.

In dieser linken Endstellung befindet sich im dargestellten Beispiel die zweite Verriegelungsplatte 46 in einer Position gegenüber dem unteren Riegelbolzen 44. Der Primärschlitten 18 kann daher beispielsweise auch in seiner linken Endstellung in Figur 2 an der Führungsschiene 16 festgelegt werden. In dieser Stellung kann wiederum der Sekundärschlitten 24, der gelöst worden ist, auf dem Primärschlitten hin- und hergefahren werden. Diese Vorgänge sind in Figur 3 und 4 gezeigt.

Figur 3 zeigt die Position der einzelnen Teile, wie sie sich beim Eintreffen des Primärschlittens 18 in der linken Endposition ergibt. Wird nunmehr der obere Riegelbolzen 42 zurückgezogen und damit der Sekundärschlitten 24 freigegeben, und zugleich der untere Riegelbolzen 44 ausgefahren und damit der Primärschlitten 18 verriegelt, so gelangen die Teile in die in Figur 4 gezeigte Stellung. Wie weiterhin aus Figur 4 hervorgeht, kann nunmehr wiederum der Sekundärschlitten 24 über die volle Länge der Führung 22 auf dem Primärschlitten 18 verfahren werden.

In allen Zeichnungen sind die selben Teile mit den selben Bezugsziffern bezeichnet worden, so daß eine erneute Erläuterung bei den nachgeordneten Figuren weitgehend entbehrlich war.

In der dargestellten Ausführungsform weist Träger 10 nur eine Verriegelungsvorrichtung 40 auf, so daß auch nur zwei mögliche Verrieglungsstellungen des Primärschlittens 18 vorgesehen sind. Es wurde bereits darauf hingewiesen, daß die beschriebene und in der Zeichnung gezeigte Ausführungsform nur als vereinfachtes, schematisch dargestelltes Beispiel zu verstehen ist. Der Träger 10 und die Führungsschiene 16 lassen sich beliebig verlängern, und in diesem Falle ist es lediglich erforderlich, in gleichmäßigen Abständen weitere Verriegelungsvorrichtungen 40 auf dem Träger vorzusehen. Da diese Verriegelungsvorrichtungen 40 in ihrer Position genau bestimmt werden können, liegen auch die Verriegelungspositionen der beiden Schlitten 18 und 24 fest. Die Abstützung des jeweils festgelegten Schlittens am Trägersystem schafft einen stabilen Ausgangspunkt für die durchzuführenden Teilbewegungen. Es ist also möglich, auch in Teilbereichen eines im Prinzip beliebig langen Trägers 10 mit hoher Genauigkeit und Bewegungsdynamik zu arbeiten.

## Patentansprüche

1. Linearantrieb mit einer ortsfesten Führungsschiene (16) und einem auf dieser verfahrbaren Schlitten (18), dadurch **gekennzeichnet**, daß der Schlitten (18) einen Primärschlitten bildet, der eine Führung (22) zur Aufnahme eines parallel zur Bewegungsrichtung des Primärschlittens mit Hilfe eines Antriebsmotors verfahrbaren Sekundärschlittens aufweist, und daß Verriegelungseinrichtungen (40, 42, 44, 46, 48, 52) zur alternativen Verriegelung des Primärschlittens (18) oder des Sekundärschlittens (24) in bezug auf die ortsfeste Führungsschiene (16) vorgesehen ist.

2. Linearantrieb nach Anspruch 1, dadurch **gekennzeichnet**, daß an dem Sekundärschlitten (24) wenigstens ein weiterer, im Winkel zu dessen Bewegungsrichtung verfahrbarer Schlitten (28) angeordnet ist.

## Claims

1. Linear drive having a stationary guide rail (16) and a carriage (18) displaceable thereon, characterized in that the carriage (18) forms a primary carriage which has a guide (22) for receiving a secondary carriage displaceable parallel with the direction of movement of the primary carriage by means of a driving motor, and in that locking devices (40, 42, 44, 46, 48, 52) are provided for locking optionally the primary carriage (18) or the secondary carriage (24) relative to the stationary guide rail (16).

2. Linear drive according to claim 1, characterized in that at least one further carriage (28) is arranged on the secondary carriage (24) and is displaceable at an angle to the direction of movement thereof.

## Revendications

1. Entraînement linéaire comprenant un rail de guidage fixe (16) et un chariot (18) pouvant se déplacer sur celui-ci, caractérisé en ce que le chariot (18) constitue un chariot primaire qui comporte un guide (22) pour recevoir un chariot secondaire pouvant se déplacer parallèlement au sens de déplacement du chariot primaire à l'aide d'un moteur d'entraînement, et en ce que des dispositifs de verrouillage (40, 42, 44, 46, 48, 52) sont prévus pour verrouiller alternativement le chariot primaire (18) ou le chariot secondaire (24) par rapport au rail de guidage fixe (16).

2. Entraînement linéaire selon la revendication 1, caractérisé en ce qu'au moins un chariot supplémentaire (28) pouvant se déplacer selon un angle par rapport au sens de déplacement du chariot secondaire (24) est disposé sur celui-ci.
